# EUROPÄISCHE PATENTSCHRIFT

(11) **EP 4 476 074 B1**
(45) Veröffentlichungstag und Bekanntmachung des Hinweises auf die Patenterteilung: **01.04.2026**
(21) Anmeldenummer: 23707869.6
(22) Anmeldetag: 09.02.2023
(51) Int. Cl.: B60B 7/04

(54) **FELGE FÜR EIN FAHRZEUGRAD**
RIM FOR VEHICLE WHEEL
JANTE POUR ROUE DE VEHICULE

(30) Priorität: 09.02.2022 DE 102022102999
(43) Veröffentlichungstag der Anmeldung: 18.12.2024
(73) Patentinhaber: KT Projektentwicklungs-GmbH, 74076 Heilbronn (DE)
(72) Erfinder: TSIBERIDIS, Konstantinos, 74199 Untergruppenbach (DE); TSOUROUKIDOU, Eleni, 88630 Pfullendorf (DE)
(74) Vertreter: Schott, Jakob Valentin
(86) Internationale Anmeldenummer: PCT/EP2023/053151
(87) Internationale Veröffentlichungsnummer: WO 2023/152201

(56) Entgegenhaltungen:
- EP-A1- 3 694 727
- EP-B1- 3 694 727
- DE-A1- 102011 016 534
- FR-A1- 3 057 805

## Beschreibung

Die vorliegende Erfindung betrifft eine Felge für ein Fahrzeugrad nach dem Oberbegriff des Patentanspruchs 1. Eine solche Felge ist aus der EP 3 694 727 B1 bekannt.

Moderne Kraftfahrzeuge sollen einen möglichst geringen Luftwiderstand aufweisen, um den Energieverbrauch eines Fahrzeugs insbesondere bei höheren Fahrgeschwindigkeiten zu reduzieren. Auch die Felgen der Fahrzeugräder sollen ihren Beitrag zu einer Verringerung des Luftwiderstands beitragen. Zur Erreichung einer möglichst widerstandsarmen Umströmung einer Fahrzeugfelge sollte deren fahrzeugaußenseitige Oberfläche möglichst glatt und geschlossen ausgebildet sein, um luftwiderstandserhöhende Luftverwirbelungen soweit wie möglich zu vermeiden.

Andererseits besteht auch das Erfordernis, die Bremsen eines Fahrzeugs, die üblicherweise in dem von den Fahrzeugfelgen umgebenen Raum angeordnet sind, gut kühlen zu können. Hierzu ist eine möglichst hohe Luftdurchströmung durch die Oberfläche der Felge erforderlich, um sowohl während der Fahrt als auch im Stand eines Fahrzeugs einen ausreichenden Luftstrom zur Fahrzeugbremse gewährleisten zu können. Diese Forderung steht der zuvor erläuterten Forderung nach einer möglichst geschlossenen Felgenoberfläche diametral entgegen.

Zur Lösung dieses Zielkonflikts wird im eingangs genannten europäischen Patent 3 694 727 eine gattungsgemäße Felge für ein Fahrzeugrad vorgeschlagen, bei der Öffnungen der Felgenoberfläche durch ein oder mehrere Abdeckelemente verschlossen sind, wobei ein solches Abdeckelement sich durch pneumatische, elektrische oder magnetische Betätigung zwischen einer ersten Stellung und einer zweiten Stellung verformen kann, um bei Bedarf Zwischenräume der Felgenoberfläche so zu öffnen, dass Kühlluft durch diese Zwischenräume strömen kann. Diese bekannte Lösung benötigt jedoch zum einen pneumatische, elektrische oder magnetische Aktuatoren, um das Abdeckelement oder die Abdeckelemente aus einer ersten Stellung in eine zweite Stellung zu verformen, und benötigt zum anderen eine zugeordnete Sensorik (Temperatursensor, Fahrgeschwindigkeitssensor etc.) und eine mit dieser Sensorik zusammenwirkende Steuerungslogik, um zu entscheiden, wann sich ein Abdeckelement aus seiner ersten Stellung in seine zweite Stellung verformen soll. Ersichtlich hat dies eine Erhöhung der Komplexität und der Kosten zur Folge.

Der Erfindung liegt die Aufgabe zugrunde, eine Lösung des erläuterten Zielkonflikts anzugeben, die einerseits die Vorteile der bekannten Lösung beibehält und andererseits weniger komplex und zugleich kosteneffizienter ist. Aus der DE 10 2011 016534 A1 ist eine Felge mit Abdeckelementen für Zwischenräume bekannt, wobei jedes Abdeckelement zwischen zwei Stellungen bewegt werden kann. Als Stellelement wird jeweils ein Dehnstoffarbeitselement verwendet, welches in Abhängigkeit der Temperatur das ihm zugeordnete Abdeckelement verstellen kann.

Ausgehend von dem eingangs genannten Stand der Technik ist diese Aufgabe erfindungsgemäß durch eine Felge für ein Fahrzeugrad gelöst, die die im Patentanspruch 1 angegebenen Merkmale aufweist. Eine erfindungsgemäße Felge für ein Fahrzeugrad zeichnet sich demnach dadurch aus, dass eine Betätigungseinrichtung, mittels der ein Abdeckelement aus einer ersten Stellung in eine zweite Stellung überführbar ist, durch ein sogenanntes Dehnstoffarbeitselement gebildet ist, welches bei Überschreiten einer ersten vordefinierten Temperatur selbsttätig beginnt, das Abdeckelement aus der ersten Stellung in Richtung der zweiten Stellung zu verlagern, wobei mehrere oder alle Abdeckelemente mit einem einzigen Dehnstoffarbeitselement als Betätigungseinrichtung zusammenwirken.

Dehnstoffarbeitselemente an sich sind bekannt. Sie werden seit vielen Jahren in Thermostaten verwendet, um in Kühl- und/oder Heizflüssigkeitskreisen eine gewünschte Temperatur einzuhalten. Ein Dehnstoffarbeitselement besteht üblicherweise aus einem Gehäuse und einem kolben- oder stößelartigen Bauteil, das von einem Dehnstoff umschlossen wird, der sich in dem Gehäuse befindet. Zur Abdichtung des Gehäuses eines Dehnstoffarbeitselements dient üblicherweise eine Membran oder ein Elastomereinsatz, die bzw. der mit dem Kolben oder Stößel kraftübertragend verbunden ist. Als Dehnstoffe haben sich beispielsweise Öl, Wachs und Hartparaffin etabliert. Durch die von außen auf das Dehnstoffarbeitselement einwirkende Temperatur verändert der Dehnstoff bei Überschreiten einer ersten vordefinierten Temperatur sein Volumen im Sinne einer Volumenvergrößerung und bewegt dadurch das kolben- oder stößelartige Bauteil, womit in einem Thermostat eine Ventilsteuerung realisiert wird. Bei Unterschreiten einer zweiten vordefinierten Temperatur, die höher ist als die erste vordefinierte Temperatur, verkleinert sich das Volumen des Dehnstoffs wieder, wodurch das kolben- oder stößelartige Bauteil in Richtung seiner Ausgangsstellung zurückbewegt werden kann, üblicherweise durch eine Federkraft. Abhängig von der Position des Kolbens oder Stößels kann so mittels eines zugeordneten Ventils ein Kühl- und/oder Heizflüssigkeitsstrom geregelt werden, um die Temperatur in einem Heiz- und/oder Kühlsystem auf einem im Wesentlichen konstanten Niveau zu halten.

Dehnstoffarbeitselemente können durch geeignete Dimensionierung ihrer Abmessungen und durch geeignete Wahl und Auslegung des verwendeten Dehnstoffes in einer Vielzahl von Varianten so hergestellt werden, dass sie innerhalb eines weiten Bereichs eine gewünschte Betätigungskraft, einen gewünschten kleinen oder auch großen Hub und einen gewünschten Regelbereich zur Verfügung stellen. Der Temperaturbereich, in dem solche Dehnstoffarbeitselemente zur Regelung eingesetzt werden können, beträgt beispielsweise - 20 °C bis + 130 °C, kann bei besonderen Anforderungen aber auch noch deutlich außerhalb dieses Temperaturbereichs liegen. Die erste vordefinierte Temperatur und die zweite vordefinierte Temperatur werden durch die geeignete Auswahl und Auslegung des Dehnstoffes vorgegeben und bestimmen den gewünschten Regelbereich in °C, z. B. von 60 - 80 °C, von 65 - 80 °C, von 71 - 85 °C, von 75 - 90 °C, von 83 - 95 °C, usw. Dehnstoffarbeitselemente der beschriebenen Art werden z.B. von der ACS GmbH in 83703 Gmund/Deutschland hergestellt und vertrieben.

Die durch ein Dehnstoffarbeitselement gebildete Betätigungseinrichtung der erfindungsgemäßen Felge stellt zuverlässig sicher, dass die der Betätigungseinrichtung zugeordneten Abdeckelemente bei Überschreiten der ersten vordefinierten Temperatur aus der ersten Stellung in Richtung der zweiten Stellung verlagert werden, ohne dass hierfür ein von einer Sensorik zur Erfassung einer Temperatur und/oder weiterer Parameter gesteuerter pneumatischer, elektrischer oder magnetischer Aktuator notwendig ist.

Vorzugsweise ist das oder jedes Abdeckelement so ausgestaltet, dass es eine flächige und überwiegend in radialer Richtung sowie in Umfangsrichtung verlaufende Erstreckung hat. Hierdurch ist zum einen sichergestellt, dass sich ein solches Abdeckelement einfach verformen lässt, und zum anderen gewährleistet, dass ein dem Abdeckelement zugeordneter Zwischenraum zuverlässig geöffnet und verschlossen werden kann.

Bei bevorzugten Ausgestaltungen der erfindungsgemäßen Felge weist das oder jedes Abdeckelement einen Befestigungsabschnitt auf, der unverschieblich mit dem Felgenkörper der Felge verbunden ist, wobei dieser Befestigungsabschnitt sich bezüglich des Felgenkörpers vorzugsweise radial außen befindet und/oder in Umfangsrichtung verläuft. Auf diese Weise ist jedes Abdeckelement sicher am Felgenkörper fixiert. Ein bezüglich des Felgenkörpers radial außen angeordneter Befestigungsabschnitt ermöglicht es in vorteilhafter Weise, eine dem Abdeckelement zugeordnete Betätigungseinrichtung in einem radial inneren Bereich der Felge anzuordnen. Im radial inneren Bereich der Felge führt eine zusätzliche Masse bei Rotation der Felge zu geringeren Umfangskräften.

Bei bevorzugten Ausgestaltungen der erfindungsgemäßen Felge weist das Abdeckelement einen Betätigungsabschnitt auf, der gegenüber dem Felgenkörper der Felge beweglich angeordnet ist, insbesondere verschieblich angeordnet ist, wobei sich dieser Betätigungsabschnitt bezüglich der Felge vorzugsweise innen befindet und/oder in Umfangsrichtung verläuft, und wobei der Betätigungsabschnitt vorzugsweise in einer axialen Richtung und/oder einer radialen Richtung und/oder in einer Umfangsrichtung beweglich bzw. verschieblich ist. Eine Anordnung des Betätigungsabschnitts bezüglich der Felge radial innen ermöglicht es in vorteilhafter Weise, diesen Betätigungsabschnitt mit einer ebenfalls radial innen angeordneten Betätigungseinrichtung des zugeordneten Abdeckelements zu koppeln. Der Betätigungsabschnitt des Abdeckelements ist vorzugsweise zusätzlich zum vorerwähnten Befestigungsabschnitt vorhanden, so dass ein Abdeckelement beispielsweise einen radial außen angeordneten Befestigungsabschnitt und einen radial weiter innen angeordneten Betätigungsabschnitt umfasst. Vorzugsweise ist der Betätigungsabschnitt eines Abdeckelements bezüglich des Felgenkörpers verschiebbar oder verschwenkbar angeordnet ist, und eine solche Verschiebung oder Verschwenkung kann vorzugsweise zwangsgeführt sein, d. h. entlang einer vorgegebenen Bewegungsbahn verlaufen.

Vorzugsweise ist die erste Stellung des Abdeckelements eine Stellung, in der der dem Abdeckelement zugeordnete Zwischenraum durch das Abdeckelement stärker abgedeckt ist als in der zweiten Stellung. Somit ist die zweite Stellung eine gegenüber der ersten Stellung weiter geöffnete Stellung. Die erste Stellung kann diejenige Stellung sein, in der der dem Abdeckelement zugeordnete Zwischenraum von dem Abdeckelement vollständig abgedeckt wird. Eine solche Stellung kann auch als Schließstellung des Abdeckelements bezeichnet werden. Die zweite Stellung kann eine Stellung sein, in der das Abdeckelement eine maximale Öffnungsposition hinsichtlich des ihm zugeordneten Zwischenraums einnimmt. Eine solche Stellung kann auch als eine vollständige Öffnungsstellung des Abdeckelements bezeichnet werden. Zwischenöffnungsstellungen sind ebenfalls möglich.

Vorzugsweise wölbt sich ein oder jedes Abdeckelement beim Übergang aus der ersten Stellung in die zweite Stellung bezüglich der Felgenoberfläche wenigstens bereichsweise axial nach außen oder axial nach innen. Bei einer wie zuvor erläutert flächigen Erstreckung eines Abdeckelements kann eine solche zumindest bereichsweise Wölbung des Abdeckelements axial nach außen oder axial nach innen einfach dazu verwendet werden, dass zwischen dem Abdeckelement und dem Felgenkörper auf zwei entgegengesetzten Seiten des Abdeckelements (beispielsweise auf zwei in Umfangsrichtung entgegengesetzten Seiten) Öffnungen entstehen, durch die Luft in den dem Abdeckelement zugeordneten Zwischenraum der Felge einströmen kann. Alternativ und/oder zusätzlich kann eine zumindest bereichsweise Wölbung des Abdeckelements aber auch nur an einer Seite des Abdeckelements erfolgen, z.B. um bei einem in Fahrt befindlichen Fahrzeug ein gerichtetes Einströmen von Kühlluft in den Zwischenraum zu fördern, beispielsweise indem die durch die Aufwölbung des Abdeckelements erzeugte Öffnung zwischen dem Abdeckelement und dem Felgenkörper zumindest zeitweilig einer Fahrtrichtung des Fahrzeugs zugewandt ist. Erfindungsgemäße Felgen weisen vorzugsweise mehrere in ihrem Felgenkörper ausgebildete Zwischenräume auf, wobei mehreren dieser Zwischenräume jeweils ein Abdeckelement zugeordnet ist. Vorzugsweise ist jedem Zwischenraum jeweils ein Abdeckelement zugeordnet.

Erfindungsgemäß wirken mehrere oder alle Abdeckelemente mit einem einzigen Dehnstoffarbeitselement als Betätigungseinrichtung zusammen. Vorzugsweise ist ein solches einziges Dehnstoffarbeitselement im Nabenabschnitt des Felgenkörpers angeordnet. Im Nabenabschnitt des Felgenkörpers führt die einer einzigen Betätigungseinrichtung zugeordnete Masse bei einer Rotation der Felge zu nahezu keinen Umfangskräften, was für einen ruhigeren Lauf der Felge vorteilhaft ist.

Wenn das Dehnstoffarbeitselement im Nabenabschnitt des Felgenkörpers angeordnet ist, dann sind vorzugsweise die Betätigungsabschnitte der mit diesem Dehnstoffarbeitselement zusammenwirkenden Abdeckelemente mit einem Fortsatz versehen, der gelenkig mit dem jeweiligen Betätigungsabschnitt verbunden ist und bis in den Nabenabschnitt des Felgenkörpers reicht. Über solche Fortsätze kann die Betätigungseinrichtung in Gestalt eines einzigen Dehnstoffarbeitselements die mehreren oder jedes Abdeckelement betätigen. Gemäß einer bevorzugten Ausgestaltung sind alle diese Fortsätze gelenkig mit einer Betätigungsplatte verbunden, die im Nabenabschnitt des Felgenkörpers verlagerbar angeordnet ist. Auf diese Betätigungsplatte, die sich zumindest im Wesentlichen rechtwinklig zu einer axialen Richtung erstreckt, entlang derer der Kolben oder Stößel des Dehnstoffarbeitselements sich bewegt, kann dann der Kolben oder Stößel des einzigen Dehnstoffarbeitselements in im Wesentlichen axialer Richtung einwirken, um die Abdeckelemente aus der ersten Stellung in die zweite Stellung zu überführen. Dabei kann diese axiale Richtung auch eine axiale Richtung bezüglich der Felge sein, insbesondere die Mittelachse der Felge.

Unabhängig davon, ob eine erfindungsgemäße Felge eine Betätigungseinrichtung oder mehrere Betätigungseinrichtungen aufweist, sind vorzugsweise das Abdeckelement, mehrere Abdeckelemente oder jedes Abdeckelement aus einem elastisch reversibel verformbaren Material gebildet oder umfassen zumindest ein solches Material. Auf diese Weise kann sich beim Übergang aus der ersten Stellung in die zweite Stellung eine Federkraft in dem verformten Abdeckelement aufbauen, die bei einem Unterschreiten der bereits genannten zweiten vordefinierten Temperatur dafür sorgt, dass sich das Abdeckelement, mehrere Abdeckelemente oder jedes Abdeckelement selbsttätig aus der zweiten Stellung in Richtung der ersten Stellung zurückbewegt. Eine solche Ausgestaltung des, mehrerer oder jedes Abdeckelements ermöglicht es, auf eine separate Rückstellfeder oder Rückstellfedern zu verzichten, und führt somit zu einer nochmaligen konstruktiven Vereinfachung einer erfindungsgemäßen Felge. Falls gewünscht oder bei einem keine federnde Rückstellkraft aufbauenden Abdeckelementmaterial erforderlich, können auch eine oder mehrere Rückstellfederelemente zum Einsatz kommen.

Bevorzugte Ausführungsformen erfindungsgemäßer Felgen zeichnen sich dadurch aus, dass dann, wenn das Abdeckelement bzw. die Abdeckelemente eine Stellung einnehmen, in der ein dem jeweiligen Abdeckelement zugeordneter Zwischenraum vollständig abgedeckt ist, das bzw. die Abdeckelemente zumindest im Wesentlichen bündig mit den Tragabschnitten verlaufen, die den jeweiligen Zwischenraum begrenzen, dem das jeweilige Abdeckelement zugeordnet ist. Mit anderen Worten verläuft das jeweilige Abdeckelement dann im Wesentlichen bündig mit der fahrzeugaußenseitigen Oberfläche des Felgenkörpers.

Die Erfindung betrifft auch ein Fahrzeugrad, welches mit einer erfindungsgemäßen Felge ausgerüstet ist, sowie ferner ein Fahrzeug, das ein Fahrzeugrad oder mehrere Fahrzeugräder aufweist, die mit einer erfindungsgemäßen Felge ausgerüstet sind.

Die erfindungsgemäße Felge wird im Folgenden anhand der beigefügten, schematischen Zeichnungen näher erläutert. Es zeigt:
- Figur 1: eine Draufsicht auf ein erstes Ausführungsbeispiel einer erfindungsgemäßen Felge für ein Fahrzeugrad,
- Figur 2: einen Querschnitt durch das in Figur 1 gezeigte, erste Ausführungsbeispiel entlang der Linie B-B in Figur 1,
- Figur 3: den Ausschnitt X aus Figur 2 in vergrößerter Darstellung,
- Figur 4: die Ansicht aus Figur 3, jedoch mit geöffnetem Abdeckelement,
- Figur 5: eine perspektivische Schnittdarstellung des in Figur 1 bis 4 dargestellten ersten Ausführungsbeispiels in geringfügig abgewandelter Form,
- Figur 6: eine perspektivische Schnittdarstellung eines Teils des ersten Ausführungsbeispiels in einem Zustand mit geöffneten Abdeckelementen,
- Figur 7: eine perspektivische Teilschnittdarstellung einer Abdeckelement-Baugruppe gemäß dem ersten Ausführungsbeispiel,
- Figur 8: ein zweites, nicht erfindungsgemäßes Ausführungsbeispiel einer Felge für ein Fahrzeugrad in Draufsicht,
- Figur 9: eine der Figur 3 entsprechende Ansicht des zweiten Ausführungsbeispiels,
- Figur 10: eine der Figur 4 entsprechende Ansicht des zweiten Ausführungsbeispiels,
- Figur 11: eine perspektivische Teilschnittdarstellung eines Details des zweiten Ausführungsbeispiels in einem unbetätigten Zustand, in dem ein Abdeckelement geschlossen ist, und
- Figur 12: eine Ansicht ähnlich der Ansicht aus Figur 11 in einem betätigten Zustand, in dem das Abdeckelement geöffnet ist.

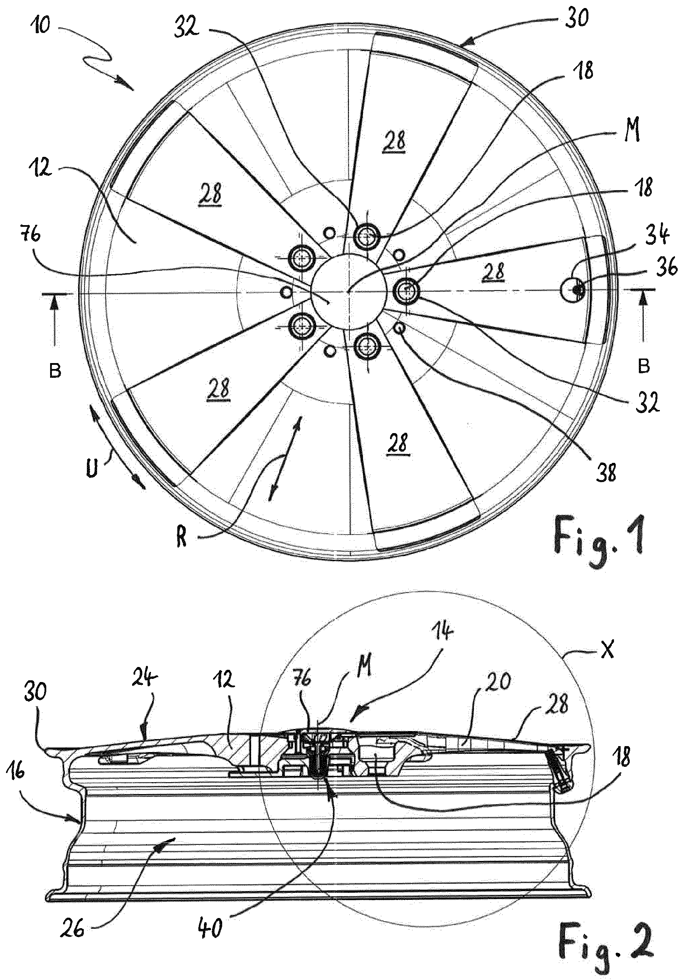

Anhand der Figuren 1 bis 7 wird nunmehr ein erstes Ausführungsbeispiel einer erfindungsgemäßen Felge 10 für ein Fahrzeugrad näher beschrieben. Die Felge 10 kann zum Beispiel eine sogenannte Leichtmetallfelge für einen PKW sein, die in allgemein bekannter und daher hier nicht näher erläuterter Weise aus einer Leichtmetalllegierung beispielsweise mittels eines Gussverfahrens hergestellt worden ist.

Die Felge 10 umfasst einen Felgenkörper 12, der beispielsweise aus der bereits angesprochenen Leichtmetalllegierung durch Gießen hergestellt worden sein kann, mit einem im Zentrum der Felge 10 angeordneten Nabenabschnitt 14 und einem radial außen ringförmig umlaufend angeordneten Felgenbett 16 zur Aufnahme eines hier nicht gezeigten Reifens. Der konzentrisch zu einer Mittelachse M angeordnete Nabenabschnitt 14 dient unter anderem zur Befestigung der Felge 10 an einem Fahrzeug (nicht gezeigt) und weist hierzu mehrere (im vorliegenden Fall fünf) Bolzenlöcher 18 auf, die parallel zur Mittelachse M verlaufen und jeweils zur Aufnahme eines hier nicht gezeigten Schraubbolzens dienen, mit denen die Felge 10 an einer Achse oder Radaufhängung eines Fahrzeugs festgeschraubt werden kann.

Zwischen dem radial innen angeordneten Nabenabschnitt 14 und dem radial außen befindlichen Felgenbett 16 verlaufen mehrere (hier fünf) Tragabschnitte 20, die häufig auch als Arme oder Speichen bezeichnet werden. Im vorliegenden Fall sind der Nabenabschnitt 14, die Tragabschnitte 20 und das Felgenbett 16 durch Gießen des Felgenkörpers 12 einstückig miteinander ausgebildet, jedoch muss dies nicht so sein. Vielmehr sind abhängig von dem für den Felgenkörper 12 zum Einsatz kommenden Material und abhängig vom Herstellungsverfahren des Felgenkörpers 12 auch Ausführungsformen möglich, bei denen der Felgenkörper 12 aus mehreren Teilen besteht, die separat voneinander hergestellt und anschließend zusammengefügt werden.

Jeweils zwei einander in einer Umfangsrichtung U der Felge 10 benachbarte Tragabschnitte 20 begrenzen zwischen sich einen Zwischenraum 22, der eine DurchgangsÖffnung zwischen einer Felgenoberseite 24 und einem von dem Felgenbett 16 umschlossenen Innenraum 26 der Felge 10 bildet. Wenn die Felge 10 an einer Achse oder Radaufhängung (nicht gezeigt) eines Fahrzeugs angebracht ist, dann befindet sich in diesem Felgeninnenraum 26 üblicherweise eine mit der Achse oder Radaufhängung des Fahrzeugs fest verbundene Fahrzeugbremse (nicht gezeigt), häufig eine sogenannte Scheibenbremse, mit der das Fahrzeug abgebremst werden kann. Aufgrund der bei einem Bremsvorgang durch die Reibung zwischen einem rotierenden Bauteil (z. B. Trommel oder Scheibe) der Bremse und feststehenden Reibbelägen (Bremsklötze) der Bremse entstehenden Reibungswärme kann eine solche Fahrzeugbremse in Betrieb sehr heiß werden und muss deshalb gekühlt werden, damit sie ihre Bremsfunktion zuverlässig erfüllen kann. Die Zwischenräume 22 des Felgenkörpers 12 ermöglichen einen Luftaustausch zwischen dem Innenraum 26 der Felge 10 und der Umgebungsatmosphäre, wodurch kühle Luft zur Bremse strömen kann und heiße Luft von der Bremse wegströmen kann. Im Fahrbetrieb verursachen die Zwischenräume 22 jedoch Luftverwirbelungen, die sich luftwiderstandserhöhend auswirken und deshalb zu einem höheren Kraftstoffverbrauch des Fahrzeugs führen.

Um den luftwiderstandserhöhenden Einfluss der Zwischenräume 22 zumindest zeitweise zu eliminieren und dennoch eine ausreichende Kühlung einer Fahrzeugbremse zu ermöglichen, sind den Zwischenräumen 22 zugeordnete Abdeckelemente 28 vorhanden. In der gezeigten Ausführungsform ist jeweils einem Zwischenraum 22 ein Abdeckelement 28 zugeordnet. Jedes Abdeckelement 28 hat in Draufsicht betrachtet eine näherungsweise tortenstückförmige Gestalt und dient dazu, den ihm zugeordneten Zwischenraum 22 von außen abzudecken. Jedes Abdeckelement 28 ist ein flächiges Element, das sich hauptsächlich radial und in Umfangsrichtung U erstreckt und dessen Dicke sehr viel geringer ist als seine Erstreckung in radialer Richtung und in Umfangsrichtung. Im gezeigten Ausführungsbeispiel erstreckt sich jedes Abdeckelement 28 vom Nabenabschnitt 14 bis nahezu zum äußeren Umfangsrand 30 des Felgenkörpers 12. Im Bereich des Nabenabschnitts 14 ist jedes Abdeckelement 28 mit einer hier runden Öffnung 32 versehen, die einen Zugang zu einem darunter angeordneten Bolzenloch 18 bzw. einem im Bolzenloch 18 befindlichen Schraubbolzen gestattet. Eines der Abdeckelemente 28 ist ferner nahe seinem radial äußeren Ende mit einer weiteren, hier ebenfalls runden Durchgangsöffnung 34 versehen, die einen Zugriff auf ein darunter befindliches Reifenventil 36 ermöglicht, über das bei montiertem Reifen dem Fahrzeugrad Luft zugeführt oder abgeführt werden kann. Nahe dem radial inneren Ende jedes Tragabschnitts 20 und in Umfangsrichtung jeweils zwischen zwei Bolzenlöchern 18 sind im Felgenkörper 12 ferner sogenannte Polykontrollbohrungen 38 ausgebildet, die von manchen Kraftfahrzeugherstellern beim Einstellen der Spur eines Fahrzeugrades Verwendung finden. Im Rahmen der vorliegenden Erfindung haben diese Polykontrollbohrungen 38 jedoch keine Funktion.

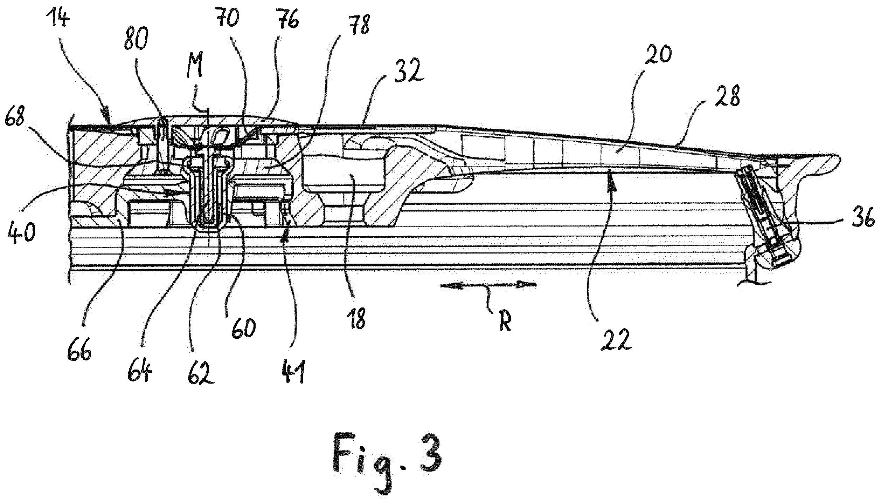

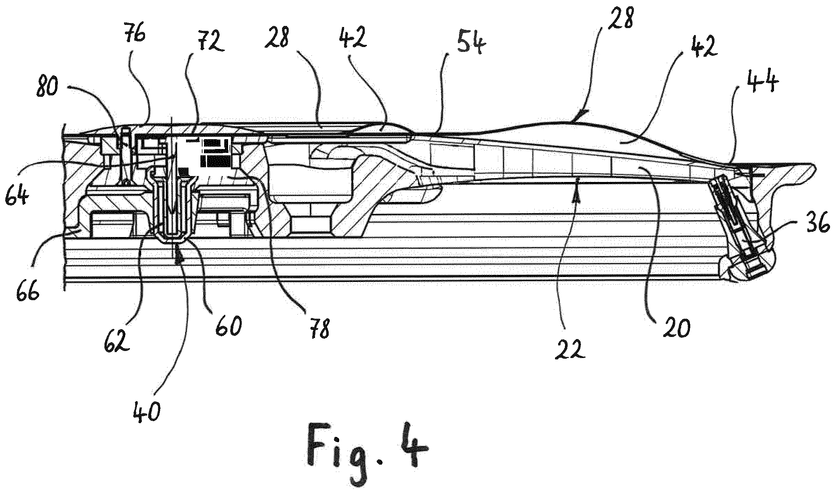

Wie besser aus den Figuren 3 und 4 ersichtlich ist, kann jedes Abdeckelement 28 eine erste Stellung einnehmen, die beispielsweise die in Figur 3 gezeigte, geschlossene Stellung sein kann, und ist aus einer ersten Stellung in eine zweite Stellung überführbar, die beispielsweise die in Figur 4 gezeigte Offenstellung sein kann. Die Überführung eines Abdeckelements 28 aus einer ersten Stellung in eine zweite Stellung erfolgt durch Verformen des Abdeckelements 28 mittels einer Betätigungseinrichtung, die durch ein sogenanntes Dehnstoffarbeitselement 40 gebildet ist, welches bei Überschreiten einer ersten vordefinierten Temperatur selbsttätig damit beginnt, das Abdeckelement 28 aus der ersten Stellung in Richtung der zweiten Stellung zu verlagern. Bei dem ersten Ausführungsbeispiel gemäß Fig. 1 bis 7 ist das Dehnstoffarbeitselement 40 in einer zentralen Ausnehmung 41 des Nabenabschnitts 14 untergebracht, die sich axial und hier konzentrisch zur Mittelachse M durch den Nabenabschnitt 14 des Felgenkörpers 12 erstreckt.

Beim gezeigten Ausführungsbeispiel wird jedes Abdeckelement 28 durch ein Verschieben seines radial inneren Endbereichs in radialer Richtung (radial nach außen) so verformt, dass ein bezüglich der Radialerstreckung mittlerer Teil des Abdeckelements 28 sich in im Wesentlichen axialer Richtung nach oben wölbt, d. h. von der Felgenoberseite 24 weg. Sobald demnach ein Abdeckelement 28 aus seiner in Figur 3 wiedergegebenen Schließstellung in eine zweite Stellung verlagert worden ist, werden durch die Aufwölbung des Abdeckelements 28 auf beiden Seiten desselben Öffnungen 42 zwischen dem jeweiligen Tragabschnitt 20 und dem Abdeckelement 28 gebildet, durch die Luft in den unter dem Abdeckelement 28 befindlichen Zwischenraum 22 ein- und ausströmen kann. Die zweite Stellung des Abdeckelements 28 kann dabei die in Figur 4 wiedergegebene Stellung sein, in der das Abdeckelement 28 seine größtmögliche Öffnungsstellung einnimmt, sie kann jedoch auch eine jegliche Stellung zwischen den in Figur 3 und Figur 4 gezeigten Stellungen sein (in einer solchen Zwischenstellung sind die Öffnungen 42 dann entsprechend kleiner).

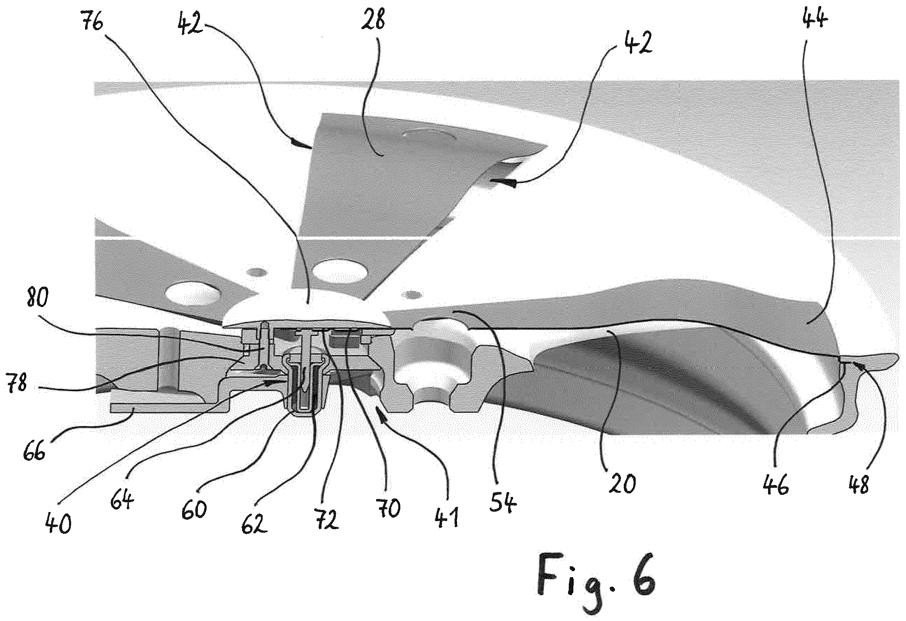

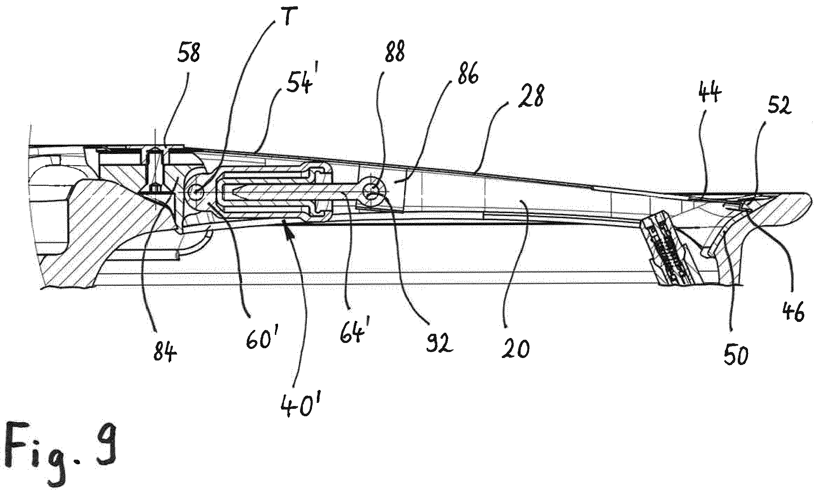

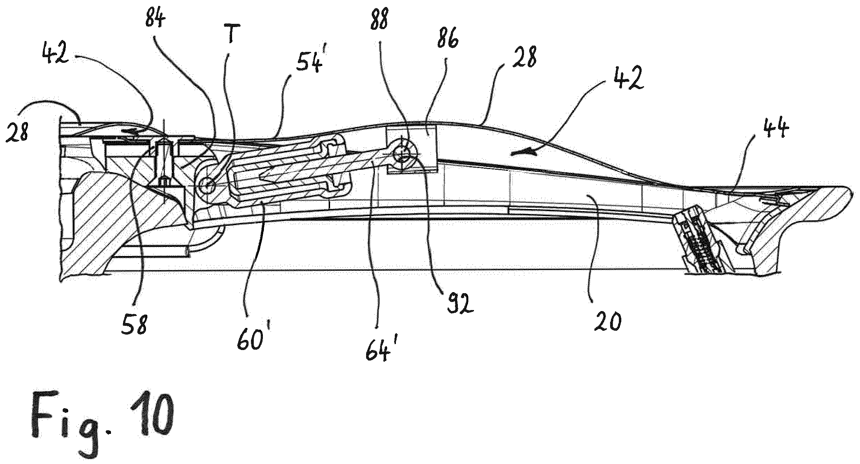

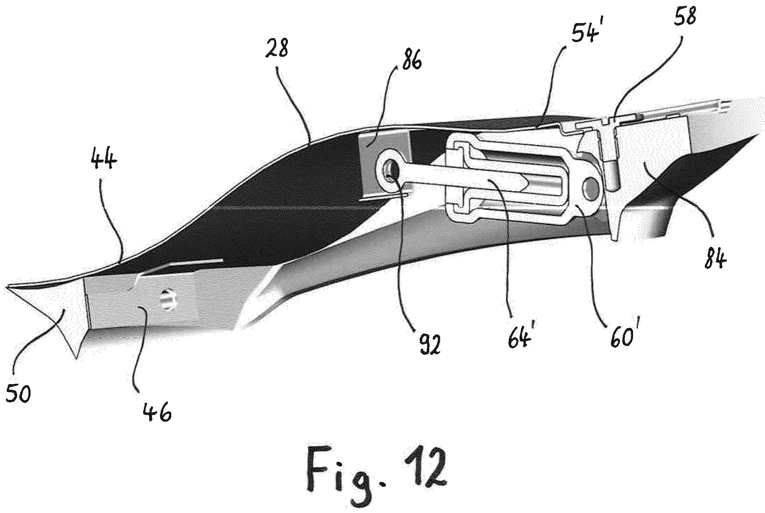

Damit sich jedes Abdeckelement 28 wie zuvor erläutert verformen kann, besteht es in den gezeigten Ausführungsbeispielen aus einem elastisch reversibel verformbaren Material (z. B. aus einem geeigneten Kunststoff oder einem geeigneten Metall bzw. einer geeigneten Metalllegierung) und ist im Bereich seines radial äußeren Endes bezüglich des Felgenkörpers 12 fixiert. Diese Fixierung erfolgt bei den gezeigten Ausführungsbeispielen mittels eines Befestigungsabschnitts 44, der den radial äußeren Teil des Abdeckelements 28 bildet und sich beispielsweise mittels einer Lasche 46 in radialer Richtung am Felgenkörper 12 abstützt. Hierzu kann im Bereich des Umfangsrandes 30 des Felgenkörpers 12 eine Nut 48 (siehe Fig. 6) vorgesehen sein, in die die mit dem Befestigungsabschnitt 44 verbundene Lasche 46 eingreift. Alternativ kann eine sich am Umfangsrand 30 abstützende Halterung 50 vorgesehen sein, an der sich die Lasche 46 in radialer Richtung abstützt, beispielsweise durch einen formschlüssigen Eingriff zwischen der Lasche 46 und einem an der Halterung 50 ausgebildeten, radial einwärts gerichteten Vorsprung 52 (siehe Figuren 9 bis 11) oder durch Fixieren der Lasche 46 an der Halterung 50 mittels beispielsweise einer Schraube oder einer Niete oder durch Verkleben etc. (siehe Figur 12, wobei ein Befestigungselement in Gestalt einer Schraube oder Niete nicht dargestellt ist).

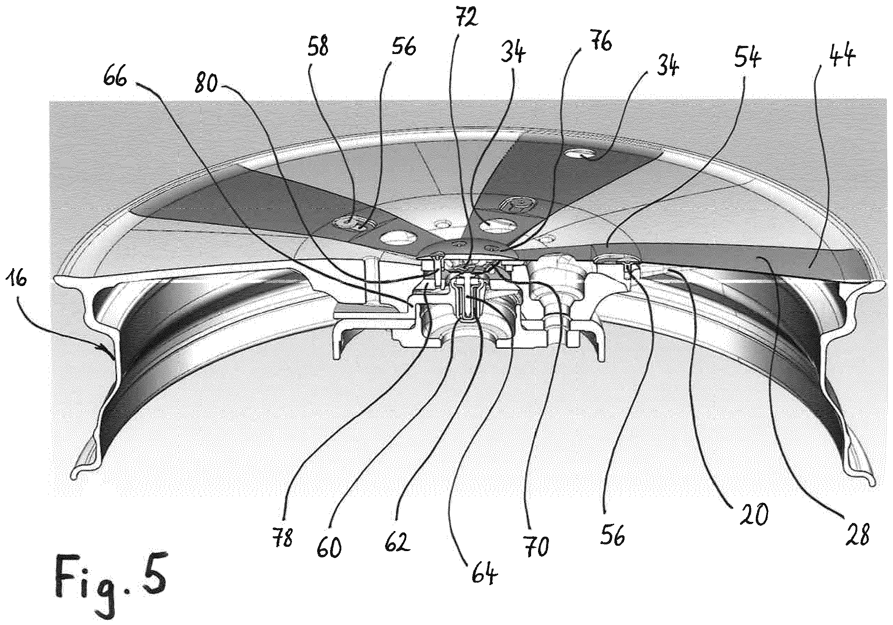

Des Weiteren ist jedes Abdeckelement 28 im Bereich seines radial inneren Endabschnitts solchermaßen gelagert, dass es einerseits am Felgenkörper 12 gehalten und andererseits radial verschiebbar ist. Hierzu weist in den gezeigten Ausführungsbeispielen jedes Abdeckelement 28 einen radial innen angeordneten Betätigungsabschnitt 54 auf, der mit einem Langloch 56 (siehe Fig. 5) versehen ist, durch das sich eine Schraube 58 erstreckt, die den Betätigungsabschnitt 54 am Felgenkörper 12 befestigt. Die Schraube 58 weist einen Schraubenkopf auf, dessen Durchmesser größer ist als eine Breite des Langlochs 56, so dass durch das Zusammenspiel des Langlochs 56 mit der Schraube 58 eine radiale Führung des Betätigungsabschnitts 54 realisiert ist. Der Betätigungsabschnitt 54 jedes Abdeckelements 28 lässt sich somit innerhalb des durch die Länge des Langlochs 56 (d. h. seine Erstreckung in radialer Richtung) vorgegebenen Bereichs radial verschieben.

Zur Bewirkung einer solchen Verschiebung dient das bereits erwähnte Dehnstoffarbeitselement 40. Ein solches Dehnstoffarbeitselement 40 hat ein Gehäuse 60 zur Aufnahme eines Dehnstoffes 62, dessen Volumen sich in Abhängigkeit der umgebenden Temperatur ändert. Bei Überschreiten einer vordefinierten (durch Wahl und Ausführung des Dehnstoffes 62) ersten Temperatur nimmt das Volumen des Dehnstoffes 62 zu. Bei Unterschreiten einer vordefinierten zweiten Temperatur, die höher ist als die vordefinierte erste Temperatur, nimmt das Volumen des Dehnstoffes 62 wieder ab. Ein gegenüber dem Innenraum des Gehäuses 60 abgedichtet geführter Kolben oder Stößel 64 ragt mit einem Ende in das Gehäuse 60 und wird bei einer Volumenzunahme des Dehnstoffs 62 aus dem Gehäuse 60 herausgedrückt. Diese temperaturabhängige, selbsttätige Bewegung des Stößels 64 wird zur Betätigung der Abdeckelemente 28 verwendet. Der Aufbau des Dehnstoffarbeitselements 40 ist hier lediglich beispielhaft angegeben und braucht auch nicht näher erläutert zu werden, da Dehnstoffarbeitselemente auf dem Gebiet der Flüssigkeitsthermostaten bereits seit langer Zeit bekannt und kommerziell erhältlich sind.

Bei dem in den Figuren 1 bis 7 dargestellten ersten Ausführungsbeispiel ist das Dehnstoffarbeitselement 40 in der Ausnehmung 41 im Zentrum des Nabenabschnitts 40 des Felgenkörpers 12 angeordnet und die Bewegung seines Stößels 64 wird dazu verwendet, alle Abdeckelemente 28 gleichzeitig zu betätigen. Das Gehäuse 60 des Dehnstoffarbeitselements 40 ist bei diesem Ausführungsbeispiel in einer Konsole 66 aufgenommen, die vom Felgeninnenraum 26 her am Felgenkörper 12 befestigt wird und als Halter für das Dehnstoffarbeitselement 40 dient. Im gezeigten Ausführungsbeispiel ist das Gehäuse 60 durch einen Abschnitt 68 (siehe Fig. 3) mit vergrößertem Außendurchmesser so ausgebildet, dass es sich in axialer Richtung an der Konsole 66 abstützen kann, wenn der Stößel 64 aus dem Gehäuse 60 herausgeschoben wird.

Damit die Hubbewegung des Stößels 64 auf die Abdeckelemente 28 übertragen werden kann, ist jeder Betätigungsabschnitt 64 gelenkig mit einem Fortsatz 70 verbunden, der von dem Betätigungsabschnitt 64 nach unten abknickend (d.h. in Richtung auf das Dehnstoffarbeitselement 40) bis in die Ausnehmung 41 reicht. Im gezeigten Ausführungsbeispiel sind zudem alle Fortsätze 70 an ihrem anderen Ende gelenkig mit einer Betätigungsplatte 72 verbunden, die axial verlagerbar in der Ausnehmung 41 angeordnet ist und sich hier rechtwinklig zur Mittelachse M erstreckt. Zur Betätigung der Abdeckelemente 28 kommt ein freies Ende 74 des Stößels 64 in Kontakt mit der ihm zugewandten Unterseite der Betätigungsplatte 72 und schiebt letztere axial nach außen, d. h. in Richtung der Felgenoberseite 24. Dadurch werden die einerseits mit der Betätigungsplatte 72 und andererseits mit dem zugehörigen Betätigungsabschnitt 54 gelenkig verbundenen Fortsätze 70 radial nach außen gedrückt und verschieben so jeden Betätigungsabschnitt 54 ebenfalls radial nach außen, wodurch es zur bereits beschriebenen Aufwölbung jedes Abdeckelements 28 kommt.

Als axiales Gegenlager für die Fortsätze 70 und die radial inneren Enden der Betätigungsabschnitte 54 bei einer solchen Betätigung dient dabei ein Deckel 76, der den zentralen Bereich des Nabenabschnitts 14 auf der Felgenoberseite 24 und insbesondere die Ausnehmung 41 überdeckt. Unterhalb dieses Deckels 76 befindet sich im Nabenabschnitt 14 zwischen der Konsole 66 und dem Deckel 76 ein Gegenring 78, durch den sich eine oder mehrere Schrauben 80 erstrecken, die in zugehörige, an der Innenseite des Deckels 76 ausgebildete Gewindebohrungen eingreifen können. Durch Festziehen der Schrauben 80 wird eine Einheit aus Deckel 76 und Gegenring 78 gebildet, die durch das Festziehen der Schrauben 80 mit einem zwischen Deckel 76 und Gegenring 78 radial in die Ausnehmung 41 ragenden Umfangsflansch 82 des Felgenkörpers 12 verspannt und dadurch am Felgenkörper 12 befestigt wird.

In den Figuren 1 bis 3, 5 und 7 ist der unbetätigte Zustand der Abdeckelemente 28 gezeigt, in dem jedes Abdeckelement 28 im Wesentlichen eben auf der Felgenoberseite 24 aufliegt und dadurch den unter dem Abdeckelement 28 befindlichen Zwischenraum 22 verschließt bzw. abdeckt. Aufgrund der geringen Dicke jedes Abdeckelements 28 verlaufen die Abdeckelemente 28 in diesem Zustand im Wesentlichen bündig mit den Tragabschnitten 20 und der Felgenoberseite 24, wodurch luftwiderstandserhöhende Verwirbelungen bei einer Umströmung der Felgenoberseite 24 weitestgehend vermieden sind. In diesem Zustand verlaufen die Fortsätze 70 aus der Ebene der Betätigungsabschnitte 54 abgewinkelt nach unten in die Ausnehmung 41 im Nabenabschnitt 14 hinein, d.h. sie erstrecken sich nach unten in Richtung des Dehnstoffarbeitselements 40. Die Betätigungsplatte 72 nimmt in diesem Zustand eine Position ein, die axial näher am Dehnstoffarbeitselement 40 ist, d.h. die Betätigungsplatte 72 liegt in diesem Zustand tiefer in der zentralen Ausnehmung 41.

In den Figuren 4 und 6 ist ein Zustand gezeigt, in dem die Abdeckelemente 28 maximal betätigt sind, d.h. in dem die Abdeckelemente 28 sich in ihrer maximalen Öffnungsstellung befinden. Wie aus Figur 4 und 6 ersehen werden kann, ist in diesem Zustand der Hub des Stößels 64 so groß, dass die Betätigungsplatte 72 an der ihr zugewandten Innenseite des Deckels 76 anliegt, wodurch die Fortsätze 70 und die mit ihnen verbundenen Betätigungsabschnitte 54 soweit radial nach außen verschoben worden sind, wie dies bei dieser Ausführungsform möglich ist. Die Aufwölbung jedes Abdeckelements 28 axial nach außen ist somit maximal (bezogen auf die dargestellte Ausführungsform) und die Öffnungen 42 sind so groß wie bei dieser Ausführungsform möglich.

Weil in den dargestellten Ausführungsbeispielen jedes Abdeckelement 28 aus einem elastisch reversibel verformbaren Material besteht, mindestens jedoch der sich aufwölbende Bereich jedes Abdeckelements 28, wird beim Übergang aus einer geschlossenen oder geschlosseneren Stellung in eine weiter geöffnete Stellung der Abdeckelemente 28 in jedem Abdeckelement 28 eine Federkraft aufgebaut, die in einer rückstellenden Richtung, d.h. in einer das zugeordnete Abdeckelement 28 schließenden Richtung wirbt. Sinkt ausgehend von dem in den Figuren 4 und 6 gezeigten Zustand die Umgebungstemperatur des Dehnstoffarbeitselements 40 unter die zweite vordefinierte Temperatur, nimmt das Volumen des Dehnstoffes 62 ab und die auf den Stößel 64 wirkende Hubkraft verringert sich oder entfällt sogar ganz (nach Unterschreiten der ersten vordefinierten Temperatur). Die in jedem Abdeckelement 28 aufgebaute Federkraft, die über die Betätigungsabschnitte 54 und die Fortsätze 70 auf die Betätigungsplatte 72 zurückwirkt, führt dann dazu, dass die Betätigungsplatte 72 sich in der Ausnehmung 41 wieder axial einwärts, d.h. nach unten verlagert und den Stößel 64 in das Gehäuse 60 hineindrückt. Diese Rückstellung findet solange statt, bis sich ein Gleichgewicht zwischen der rückstellenden Federkraft und der vom Dehnstoffarbeitselement 40 gelieferten Hubkraft einstellt. Stellt das Dehnstoffarbeitselement 40 keine Hubkraft mehr bereit, was ab einem Unterschreiten der ersten vordefinierten Temperatur der Fall ist, werden die Abdeckelemente 28 durch die in ihnen aufgebaute, rückstellende Federkraft wieder in die in den Figuren 1 bis 3, 5 und 7 gezeigte Schließstellung bewegt.

Bei Ausführungsformen einer erfindungsgemäßen Felge 10, bei der sich beim Öffnen der Abdeckelemente 28 in letzteren eine rückstellende Federkraft aufbaut, werden die Abdeckelemente 28 demnach nicht nur selbsttätig geöffnet (in Abhängigkeit von der ersten vordefinierten Temperatur durch das Dehnstoffarbeitselement 40), sondern auch selbsttätig rückgestellt bzw. geschlossen (durch die rückstellende Federkraft und in Abhängigkeit der zweiten vordefinierten Temperatur). Bei Ausführungsformen, in denen Abdeckelemente 28 Verwendung finden, die bei ihrer Verformung keine Federkraft aufbauen, können ergänzend ein oder mehrere separate Rückstellfederelemente zum Einsatz kommen, um eine Rückstellung geöffneter Abdeckelemente 28 in Richtung der Schließstellung zu bewirken (nicht gezeigt).

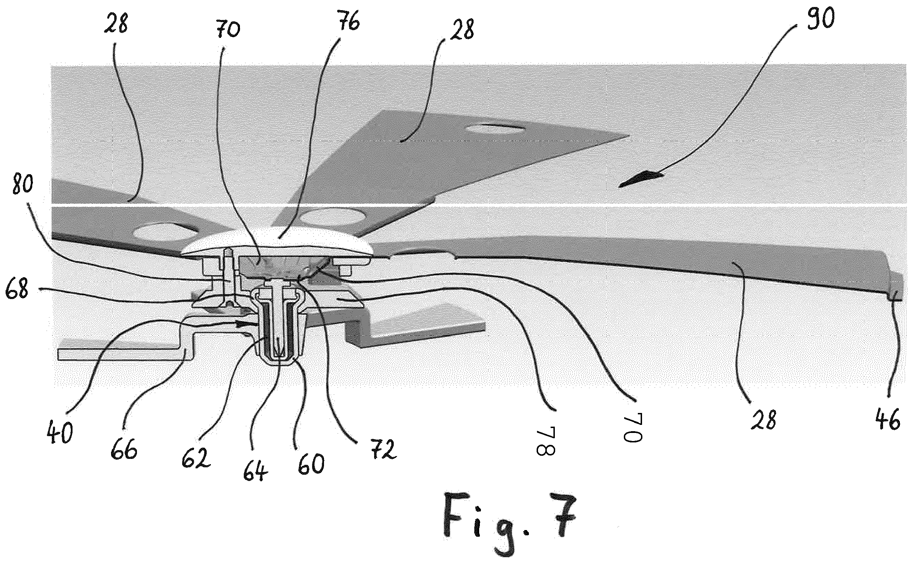

Figur 7 zeigt losgelöst von einem Felgenkörper 12 eine Abdeckelement-Baugruppe 90, die aus den Abdeckelementen 28 mit ihren Betätigungsabschnitten 54 und den zugeordneten Fortsätzen 70 sowie der damit verbundenen Betätigungsplatte 72, dem Dehnstoffarbeitselement 40 mit seinem Stößel 64, der Konsole 66, dem Deckel 76 und dem Gegenring 78 samt Schrauben 80 besteht. Diese Abdeckelement-Baugruppe 90 entspricht in ihrem Aufbau der in den Figuren 1 bis 6 gezeigten Anordnung. Die Abdeckelemente 28 können mitsamt den Fortsätzen 70 und der Betätigungsplatte 72 durch ein einstückiges, beispielsweise im Kunststoffspritzgussverfahren gefertigtes Bauteil realisiert sein. Die gelenkigen Verbindungen zwischen Betätigungsplatte 72 und Fortsätzen 70 einerseits und zwischen Fortsätzen 70 und Betätigungsabschnitten 54 andererseits können in einem solchen Fall durch sogenannte Foliengelenke oder Folienscharniere gebildet sein. Eine solche einteilige Ausführung ist auch aus Metallblech realisierbar. Alternativ können insbesondere die Abdeckelemente 28 als separate Bauteile ausgeführt sein (ggfs. zusammen mit dem zugehörigen Fortsatz 70) und die Betätigungsplatte 72 kann ein separates Bauteil sein (falls gewünscht zusammen mit den benötigten Fortsätzen 70) oder die Abdeckelemente 28, die Fortsätze 70 und die Betätigungsplatte 72 können jeweils als separate Bauteile ausgeführt sein. Wichtig ist lediglich, dass die axiale Hubbewegung des Stößels 64 des Dehnstoffarbeitselements 40 in eine Radialverschiebung der Betätigungsabschnitte 54 der Abdeckelemente 28 umgesetzt wird. Eine Abdeckelement-Baugruppe 90 wie zuvor beschrieben kann auch nachträglich an einem dafür vorgesehenen Felgenkörper 12 montiert werden.

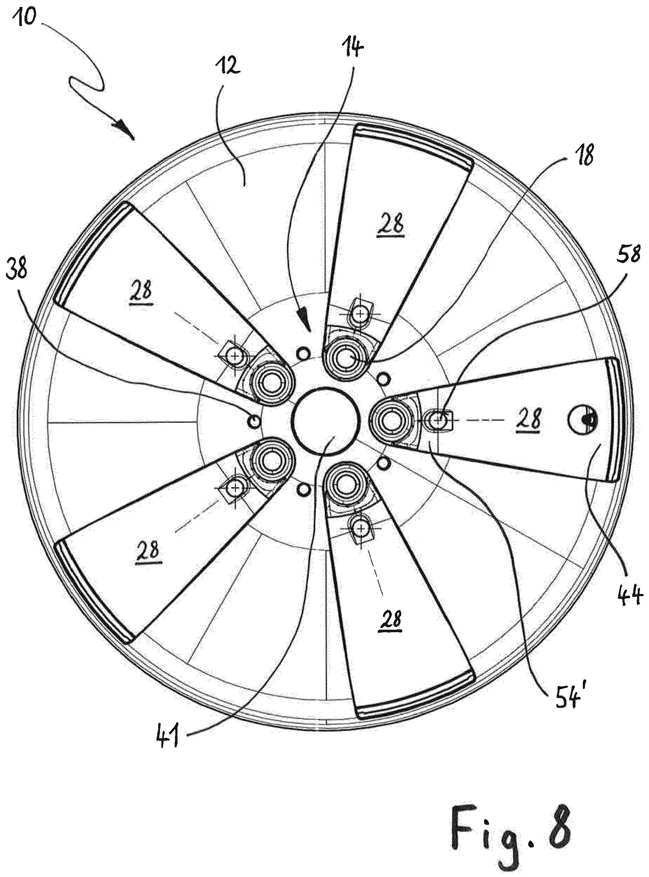

In den Figuren 8 bis 12 ist ein zweites, nicht erfindungsgemäßes Ausführungsbeispiel einer Felge 10 für ein Fahrzeugrad dargestellt, dass sich von dem ersten Ausführungsbeispiel vor allem dadurch unterscheidet, dass kein zentral in der Ausnehmung 41 angeordnetes Dehnstoffarbeitselement 40 vorhanden ist, welches in der zuvor beschriebenen Weise alle Abdeckelemente 28 gemeinsam zu betätigen vermag. Vielmehr wird beim zweiten Ausführungsbeispiel jedes Abdeckelement 28 durch ein ihm zugeordnetes, eigenes Dehnstoffarbeitselement 40' betätigt. Es fehlen demnach bei diesem zweiten Ausführungsbeispiel die Konsole 66, die Betätigungsplatte 72 und die Fortsätze 70, der Deckel 76 und der Gegenring 78 samt Schrauben 80. Stattdessen ist unterhalb des Betätigungsabschnitts 54' jedes Abdeckelements 28 ein Dehnstoffarbeitselement 40' angeordnet, dessen Gehäuse 60' an seinem vom Stößel 64' abgewandten Ende schwenkbar mit einem inneren Haltering 84 verbunden ist, der als radial innere Lagerung für die Abdeckelemente 28 dient. Der innere Haltering 84 kann aus einem einzigen Stück bestehen oder aus mehreren Abschnitten zusammengesetzt sein und aus Kunststoff, Metall oder einem anderen geeigneten Material bestehen. Beispielsweise kann jedem Abdeckelement 28 ein eigener Abschnitt des inneren Halterings 84 zugeordnet sein, sodass jedes Abdeckelement 28 als separate Baugruppe in den Felgenkörper 12 eingesetzt oder aus ihm gelöst werden kann. Die radial äußere Halterung 50 kann dabei einstückig ausgeführt oder in Umfangsrichtung U aus mehreren Elementen zusammengesetzt sein, abhängig von der Art der Fixierung der Lasche 46 des Abdeckelements 28 an der Halterung 50.

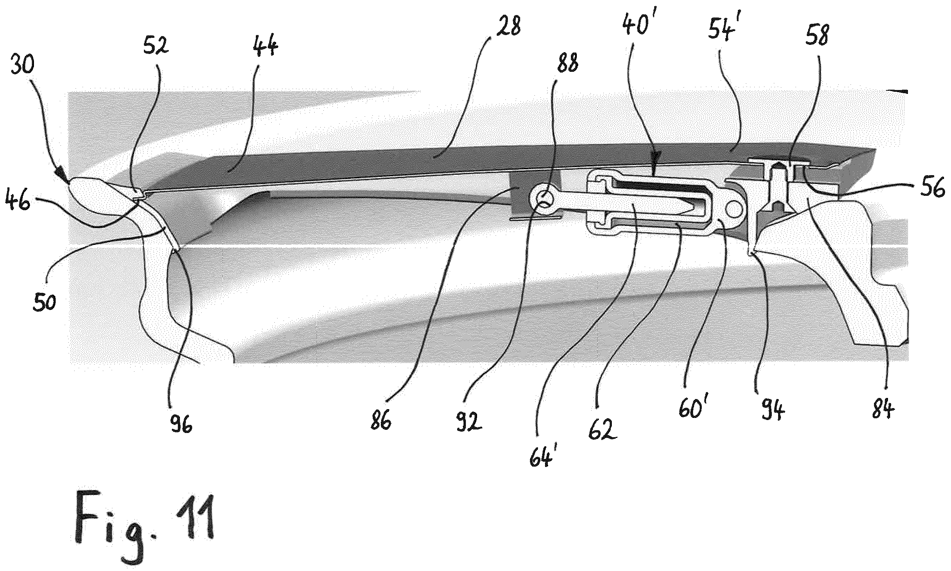

Zur einfachen Verbindung mit Felgenkörper 12 können der innere Haltering 84 und/oder die ringförmige Halterung 50 in die durch die Zwischenräume 22 gebildeten Aussparungen des Felgenkörpers 12 eingeklipst sein. Hierzu können, wie in Figur 11 dargestellt, axial innen am inneren Haltering 84 und/oder an der ringförmigen Halterung 50 Rastnasen 94 bzw. 96 ausgebildet sein, die hinter einem Rand der durch die Zwischenräume 22 gebildeten Aussparungen im Felgenkörper 12 verrasten.

Das Dehnstoffarbeitselement 40' erstreckt sich wie in den Figuren 9 bis 12 dargestellt beim zweiten Ausführungsbeispiel in radialer Richtung und ist durch die beschriebene Lagerung seines Gehäuses 60' am inneren Haltering 84 um eine tangential zur Umfangsrichtung U angeordnete Achse T schwenkbar. Zur kraftübertragenden Verbindung des Dehnstoffarbeitselements 40' mit dem Abdeckelement 28 ist das freie Ende des Stößels 64' nach Art eines Pleuels mit einer Betätigungslasche 86 schwenkbar verbunden, die an der Innenseite des Abdeckelements 28 fest angebracht ist und sich axial einwärts erstreckt. An der Betätigungslasche 86 ist ein sich rechtwinklig zur Betätigungslasche 86 erstreckender Stift 88 befestigt, der in ein Auge 92 am freien Ende des Stößels 64' eingreift, um den Stößel 64' gelenkig mit dem Abdeckelement 28 zu verbinden.

Die Funktion des Dehnstoffarbeitselements 40' ist grundsätzlich so wie zuvor im Zusammenhang mit dem ersten Ausführungsbeispiel beschrieben. Eine durch Überschreiten der ersten vordefinierten Temperatur ausgelöste Volumenzunahme des Dehnstoffs 62 hat zur Folge, dass der Stößel 64' aus dem Gehäuse 60' herausgedrückt wird. Im Unterschied zum ersten Ausführungsbeispiel erfolgt die Bewegung des Stößels 64' jedoch nicht in axialer Richtung (wie beim ersten Ausführungsbeispiel), sondern in im wesentlichen radialer Richtung. Die Bewegung des Stößels 64' wird über den Stift 88 und die Betätigungslasche 86 auf das zugehörige Abdeckelement 28 übertragen, dessen Betätigungsabschnitt 54' analog dem Betätigungsabschnitt 54 des ersten Ausführungsbeispiels radial verschiebbar gelagert ist und sich demzufolge radial verschiebt, wodurch das Abdeckelement 28 aufgewölbt wird. Ein solcher aufgewölbter, betätigter Zustand des Abdeckelements gemäß dem zweiten Ausführungsbeispiel ist in Figur 12 dargestellt. Ebenso wie beim ersten Ausführungsbeispiel baut sich, bei entsprechender Ausführung des Abdeckelements 28, beim Übergang aus der geschlossenen Stellung des Abdeckelements 28 in eine geöffnete Stellung desselben eine Federkraft auf, die analog zum ersten Ausführungsbeispiel für eine Rückstellung des Abdeckelements 28 sorgt, sobald die zweite vordefinierte Temperatur unterschritten wird. Die sonstige Funktion der Abdeckelemente 28 des zweiten Ausführungsbeispiels und die dadurch erreichten Vorteile entsprechen denen des ersten Ausführungsbeispiels.

## Patentansprüche

1. Felge (10) für ein Fahrzeugrad, mit
- einem Felgenkörper (12), der
-- einen Nabenabschnitt (14),
-- ein Felgenbett (16) zur Aufnahme eines Reifens,
-- mehrere zwischen dem Nabenabschnitt (14) und dem Felgenbett (16) angeordnete Tragabschnitte (20), und
-- wenigstens einen zwischen Tragabschnitten (20) angeordneten Zwischenraum (22) aufweist,
- wenigstens einem Abdeckelement (28), das einem Zwischenraum (22) zugeordnet ist, wobei
-- das Abdeckelement (28) mittels einer Betätigungseinrichtung aus einer ersten Stellung in eine zweite Stellung überführbar ist und wobei sich eine Abdeckung des Zwischenraums (22) durch das Abdeckelement (28) in der ersten Stellung von einer Abdeckung des Zwischenraums (22) durch das Abdeckelement (28) in der zweiten Stellung unterscheidet, und wobei
-- das Abdeckelement (28) sich beim Übergang aus der ersten Stellung in die zweite Stellung verformt,
**dadurch gekennzeichnet, dass**
- die Betätigungseinrichtung durch ein Dehnstoffarbeitselement (40) gebildet ist, welches bei Überschreiten einer ersten vordefinierten Temperatur selbsttätig beginnt, das Abdeckelement (28) aus der ersten Stellung in Richtung der zweiten Stellung zu verlagern,
- der Felgenkörper (12) mehrere Zwischenräume (22) aufweist, wobei mehreren, vorzugsweise allen Zwischenräumen (22) jeweils ein Abdeckelement (28) zugeordnet ist, und
- mehrere oder alle Abdeckelemente (28) mit einem einzigen Dehnstoffarbeitselement (40) als Betätigungseinrichtung zusammenwirken.

2. Felge nach Anspruch 1,
**dadurch gekennzeichnet, dass** das Dehnstoffarbeitselement (40) ein Gehäuse (60; 60') und einen Kolben oder Stößel (64; 64') aufweist, der von einem in dem Gehäuse (60; 60') enthaltenen Dehnstoff (62) umschlossen ist, dessen Volumen sich in Abhängigkeit der Temperatur ändert.

3. Felge nach Anspruch 1 oder 2,
**dadurch gekennzeichnet, dass** das Abdeckelement (28) einen Befestigungsabschnitt (44) aufweist, der unverschieblich mit dem Felgenkörper (12) der Felge (10) verbunden ist, wobei der Befestigungsabschnitt (44) sich bezüglich der Felge vorzugsweise radial außen befindet und/oder in Umfangsrichtung (U) verläuft.

4. Felge nach einem der Ansprüche 1 bis 3,
**dadurch gekennzeichnet, dass** das Abdeckelement (28) einen Betätigungsabschnitt (54; 54') aufweist, der gegenüber dem Felgenkörper (12) der Felge (10) beweglich, insbesondere verschiebbar ist, wobei der Betätigungsabschnitt (54; 54') sich bezüglich der Felge vorzugsweise radial innen befindet und/oder in Umfangsrichtung (U) verläuft, und wobei der Betätigungsabschnitt (54; 54') vorzugsweise in einer axialen Richtung (A) und/oder in einer radialen Richtung (R) und/oder in einer Umfangsrichtung (U) beweglich bzw. verschiebbar ist.

5. Felge nach einem der vorhergehenden Ansprüche,
**dadurch gekennzeichnet, dass** die erste Stellung eine Stellung ist, in der der Zwischenraum (22) durch das Abdeckelement (28) stärker abgedeckt ist als in der zweiten Stellung, wobei die erste Stellung vorzugsweise vollständig abgedeckt ist.

6. Felge nach einem der vorhergehenden Ansprüche,
**dadurch gekennzeichnet, dass** die zweite Stellung eine Stellung ist, in der der Zwischenraum (22) durch das Abdeckelement (28) weniger stark abgedeckt ist als in der ersten Stellung, wobei die zweite Stellung vorzugsweise eine Stellung ist, in der das Abdeckelement (28) eine maximale Öffnungsposition einnimmt.

7. Felge nach einem der vorhergehenden Ansprüche,
**dadurch gekennzeichnet, dass** das Abdeckelement (28) sich beim Übergang aus der ersten Stellung in die zweite Stellung bezüglich der Felge wenigstens bereichsweise axial nach außen oder axial nach innen wölbt.

8. Felge nach Anspruch 1,
**dadurch gekennzeichnet, dass** das einzige Dehnstoffarbeitselement (40) im Nabenabschnitt (14) des Felgenkörpers (12) angeordnet ist.

9. Felge nach Anspruch 8,
**dadurch gekennzeichnet, dass** Betätigungsabschnitte (54) mehrerer oder aller Abdeckelemente (28) jeweils mit einem Fortsatz (70) verbunden sind, der gelenkig mit dem jeweiligen Betätigungsabschnitt (54) verbunden ist und bis in den Nabenabschnitt (14) des Felgenkörpers (12) reicht.

10. Felge nach Anspruch 9,
**dadurch gekennzeichnet, dass** alle Fortsätze (70) gelenkig mit einer Betätigungsplatte (72) verbunden sind, die in einer Ausnehmung (41) des Nabenabschnitts (14) des Felgenkörpers (12) verlagerbar angeordnet ist und auf die ein Kolben oder Stößel (64) des einzigen Dehnstoffarbeitselements (40) in zumindest im Wesentlichen axialer Richtung einwirkt, um die Abdeckelemente (28) aus der ersten Stellung in die zweite Stellung zu überführen.

11. Felge nach einem der vorhergehenden Ansprüche,
**dadurch gekennzeichnet, dass** das, mehrere oder jedes Abdeckelement (28) ein sich elastisch reversibel verformenden Material umfasst, das beim Übergang aus der ersten Stellung in die zweite Stellung eine Federkraft aufbaut, die bei einem Unterschreiten einer zweiten vordefinierten Temperatur dafür sorgt, dass sich das, mehrere oder jedes Abdeckelement (28) aus der zweiten Stellung in Richtung der ersten Stellung zurückbewegt.

12. Felge nach einem der vorhergehenden Ansprüche,
**dadurch gekennzeichnet, dass** dann, wenn das Abdeckelement (28) bzw. die Abdeckelemente (28) eine Stellung einnehmen, in der ein dem jeweiligen Abdeckelement (28) zugeordneter Zwischenraum (22) vollständig abgedeckt ist, das bzw. die Abdeckelemente (28) zumindest im Wesentlichen bündig mit den Traabschnitten (20) verlaufen, die den jeweiligen Zwischenraum (22) begrenzen, dem das jeweilige Abdeckelement zugeordnet ist.

13. Fahrzeugrad,
**dadurch gekennzeichnet, dass** es eine Felge (10) nach einem der vorhergehenden Ansprüche umfasst.

14. Fahrzeug,
**dadurch gekennzeichnet, dass** es wenigstens ein Fahrzeugrad nach Anspruch 13 aufweist.

## Claims

1. Rim (10) for a vehicle wheel, having
- a rim body (12), which has
-- a hub portion (14),
-- a rim well (16) for receiving a tyre,
-- a plurality of carrier portions (20) arranged between the hub portion (14) and the rim well (16), and
-- at least one intermediate space (22) arranged between carrier portions (20),
- at least one cover element (28), which is associated with an intermediate space (22), wherein
-- the cover element (28) can be transferred by means of an actuating device from a first position into a second position, and wherein a coverage of the intermediate space (22) by the cover element (28) in the first position is different from a coverage of the intermediate space (22) by the cover element (28) in the second position, and wherein
-- the cover element (28) deforms as it moves from the first position into the second position,
**characterised in that**
- the actuating device is formed by an expansion material working element (40), which, when a first predefined temperature is exceeded, automatically begins to displace the cover element (28) from the first position in the direction towards the second position,
- the rim body (12) has a plurality of intermediate spaces (22), wherein a plurality, preferably all, of the intermediate spaces (22) each have an associated cover element (28), and
- a plurality or all of the cover elements (28) cooperate with a single expansion material working element (40) as the actuating device.

2. Rim according to claim 1,
**characterised in that** the expansion material working element (40) has a housing (60; 60') and a piston or plunger (64; 64'), which is surrounded by an expansion material contained in the housing (60; 60'), the volume of which expansion material changes in dependence on the temperature.

3. Rim according to claim 1 or 2,
**characterised in that** the cover element (28) has a fastening portion (44), which is non-displaceably connected to the rim body (12) of the rim (10), wherein the fastening portion (44) is preferably located radially on the outside with respect to the rim and/or extends in the circumferential direction (U).

4. Rim according to any one of claims 1 to 3,
**characterised in that** the cover element (28) has an actuating portion (54; 54'), which is movable, in particular displaceable, relative to the rim body (12) of the rim (10), wherein the actuating portion (54; 54') is preferably located radially on the inside with respect to the rim and/or extends in the circumferential direction (U), and wherein the actuating portion (54; 54') is preferably movable or displaceable in an axial direction (A) and/or in a radial direction (R) and/or in a circumferential direction (U).

5. Rim according to any one of the preceding claims,
**characterised in that** the first position is a position in which the intermediate space (22) is covered by the cover element (28) to a greater extent than in the second position, wherein the first position is preferably covered completely.

6. Rim according to any one of the preceding claims,
**characterised in that** the second position is a position in which the intermediate space (22) is covered by the cover element (28) to a lesser extent than in the first position, wherein the second position is preferably a position in which the cover element (28) assumes a maximum opening position.

7. Rim according to any one of the preceding claims,
**characterised in that**, as the cover element (28) moves from the first position into the second position, it curves axially outwards or axially inwards with respect to the rim at least in some regions.

8. Rim according to claim 1,
**characterised in that** the single expansion material working element (40) is arranged in the hub portion (14) of the rim body (12).

9. Rim according to claim 8,
**characterised in that** actuating portions (54) of a plurality or of all of the cover elements (28) are each connected to a projection (70), which is connected in an articulated manner to the respective actuating portion (54) and reaches into the hub portion (14) of the rim body (12).

10. Rim according to claim 9,
**characterised in that** all the projections (70) are connected in an articulated manner to an actuating plate (72), which is displaceably arranged in a recess (41) of the hub portion (14) of the rim body (12) and is acted upon in an at least substantially axial direction by a piston or plunger (64) of the single expansion material working element (40) in order to transfer the cover elements (28) from the first position into the second position.

11. Rim according to any one of the preceding claims,
**characterised in that** the, a plurality or each cover element (28) comprises an elastically reversibly deformable material, which exerts a spring force during the transfer from the first position into the second position, said spring force ensuring, when the temperature falls below a second predefined temperature, that the, a plurality or each cover element (28) moves back from the second position in the direction towards the first position.

12. Rim according to any one of the preceding claims,
**characterised in that**, when the cover element (28) or the cover elements (28) assume(s) a position in which an intermediate space (22) associated with the respective cover element (28) is covered completely, the cover element(s) (28) extend(s) at least substantially flush with the carrier portions (20) delimiting the respective intermediate space (22) with which the respective cover element is associated.

13. Vehicle wheel,
**characterised in that** it comprises a rim (10) according to any one of the preceding claims.

14. Vehicle,
**characterised in that** it has at least one vehicle wheel according to claim 13.

## Revendications

1. Jante (10) pour roue de véhicule, comprenant
- un corps de jante (12), qui
-- comprend une section moyeu (14),
-- une base de jante (16) servant à recevoir un pneu,
-- plusieurs sections de support (20) disposées entre la section de moyeu (14) et la base de jante (16), et
-- au moins un espace intermédiaire (22) disposé entre les sections de support (20),
- au moins un élément de recouvrement (28) qui est associé à un espace intermédiaire (22), dans lequel
-- l'élément de recouvrement (28) peut être déplacé d'une première position à une deuxième position à l'aide d'un dispositif d'actionnement, et le recouvrement de l'espace intermédiaire (22) par l'élément de recouvrement (28) dans la première position diffère du recouvrement de l'espace intermédiaire (22) par l'élément de recouvrement (28) dans la deuxième position, et
-- l'élément de recouvrement (28) se déforme lors du passage de la première position à la deuxième position,
**caractérisée en ce que**
- le dispositif d'actionnement est formé par un élément d'expansion (40) qui, lorsqu'une première température prédéfinie est dépassée, commence automatiquement à déplacer l'élément de recouvrement (28) de la première position vers la deuxième position,
- le corps de jante (12) comprend plusieurs espaces intermédiaires (22), un élément de recouvrement (28) étant associé à plusieurs, de préférence à tous les espaces intermédiaires (22), et
- plusieurs ou tous les éléments de recouvrement (28) coopérant avec un seul élément d'expansion (40) en tant que dispositif d'actionnement.

2. Jante selon la revendication 1
**caractérisé en ce que** l'élément de travail à matériau expansible (40) comporte un boîtier (60 ; 60') et un piston ou poussoir (64 ; 64') qui est entouré par un matériau expansible (62) contenu dans le boîtier (60 ; 60') et dont le volume varie en fonction de la température.

3. Jante selon la revendication 1 ou 2
**caractérisé en ce que** l'élément de recouvrement (28) présente une section de fixation (44) qui est reliée à demeure au corps (12) de la jante (10), la partie de fixation (44) étant située de préférence radialement à l'extérieur par rapport à la jante et/ou s'étendant dans le sens circonférentiel (U).

4. Jante selon l'une quelconque des revendications 1 à 3
**caractérisé en ce que** l'élément de recouvrement (28) comprend une section d'actionnement (54 ; 54') qui est mobile, en particulier en coulissement, par rapport au corps de jante (12) de la jante (10), la section d'actionnement (54 ; 54') se trouve de préférence radialement à l'intérieur par rapport à la jante et/ou s'étend dans la direction circonférentielle (U), et la section d'actionnement (54 ; 54') étant de préférence mobile ou déplaçable dans une direction axiale (A) et/ou dans une direction radiale (R) et/ou dans une direction circonférentielle (U).

5. Jante selon l'une quelconque des revendications précédentes
**caractérisée en ce que** la première position est une position dans laquelle l'espace intermédiaire (22) est davantage recouvert par l'élément de recouvrement (28) que dans la deuxième position, la première position étant de préférence entièrement recouverte.

6. Jante selon l'une quelconque des revendications précédentes
**caractérisé en ce que** la deuxième position est une position dans laquelle l'espace intermédiaire (22) est moins recouvert par l'élément de recouvrement (28) que dans la première position, la deuxième position étant de préférence une position dans laquelle l'élément de recouvrement (28) occupe une position d'ouverture maximale.

7. Jante selon l'une quelconque des revendications précédentes,
**caractérisé en ce que** l'élément de recouvrement (28) se courbe axialement vers l'extérieur ou axialement vers l'intérieur, au moins par endroits, par rapport à la jante lors du passage de la première position à la deuxième position.

8. Jante selon la revendication 1
**caractérisé en ce que** le seul élément d'expansion (40) est disposé dans la section de moyeu (14) du corps de jante (12).

9. Jante selon la revendication 8,
**caractérisé en ce que** les sections d'actionnement (54) de plusieurs ou de tous les éléments de recouvrement (28) sont chacune reliées à un prolongement (70) qui est relié par charnière à la section d'actionnement (54) correspondante et s'étend jusqu'à la section de moyeu (14) du corps de jante (12).

10. Jante selon la revendication 9,
**caractérisé en ce que** toutes les prolongements (70) sont reliées par charnière à une plaque d'actionnement (72) qui peut se déplacer dans un évidement (41) de la section de moyeu (14) du corps de jante (12) et sur laquelle un piston ou un poussoir (64) du seul élément d'expansion (40) agit dans une direction au moins essentiellement axiale afin de faire passer les éléments de recouvrement (28) de la première position à la deuxième position.

11. Jante selon l'une quelconque des revendications précédentes,
**caractérisé en ce que** le ou les éléments de recouvrement (28) comprennent un matériau élastiquement déformable et réversible qui, lors du passage de la première position à la deuxième position, génère une force élastique qui, lorsqu'une deuxième température prédéfinie n'est pas atteinte, garantit que le ou les éléments de recouvrement (28) reviennent de la deuxième position vers la première position.

12. Jante selon l'une quelconque des revendications précédentes,
**caractérisé en ce que**, lorsque l'élément de recouvrement (28) ou les éléments de recouvrement (28) occupent une position dans laquelle un espace intermédiaire (22) associé à l'élément de recouvrement (28) respectif est entièrement recouvert, le ou les éléments de recouvrement (28) sont au moins sensiblement à fleur avec les sections de support (20) qui délimitent l'espace intermédiaire respectif (22) auquel l'élément de recouvrement respectif est associé.

13. Roue de véhicule
**caractérisée en ce qu'**elle comprend une jante (10) selon l'une quelconque des revendications précédentes.

14. Véhicule
**caractérisé en ce qu'**il comprend une roue de véhicule selon la revendication 13.
